# EUROPÄISCHE PATENTANMELDUNG

(11) **EP 2 725 240 A2**
(43) Veröffentlichungstag der Anmeldung: **30.04.2014**
(21) Anmeldenummer: 13401115.4
(22) Anmeldetag: 21.10.2013
(51) Int. Cl.: F15B 15/14, A01C 17/00

(54) **Hydraulikzylinder**

(30) Priorität: 25.10.2012 DE 102012110192
(71) Anmelder: Amazonen-Werke H. Dreyer GmbH & Co. KG, 49205 Hasbergen (DE)
(72) Erfinder: Johannaber, Stefan Jan, 49536 Lienen (DE); Lampert, Tobias, 49504 Lotte (DE)

(57) **Zusammenfassung**

Hydraulikzylinder (15) mit einem Zylinderrohr (22) und zumindest einem am Ende der Kolbenstange (29,30) angeordnetem Kolben (31), der in dem Zylinderrohr angeordnet ist, wobei ein Schutzrohr (25) aus nichtrostendem Material über das Zylinderrohr geschoben und mit diesem fest verbunden ist, wobei an dem aus dem Zylinderrohr herausragendem Ende der Kolbenstange und an dem Zylinderrohr jeweils eine Befestigungsvorrichtung (34,35,37) angeordnet ist. Um den doppelwirkenden Hydraulikzylinder durch einen entsprechenden Werkstoffschutz vor den korrosiven Einflüssen zu schützen, ist die dem Zylinderrohr zugeordnete Befestigungsvorrichtung an dem Schutzrohr angeordnet.

## Beschreibung

Die Erfindung betrifft einen Hydraulikzylinder gemäß dem Oberbegriff des Anspruches 1.

Derartige Hydraulikzylinder sind in der Praxis bekannt geworden. Diese Hydraulikzylinder sind durch eine Befestigungsvorrichtung am Zylindergehäusefuß und am gegenüberliegenden Kolbenstangenende zwischen den zueinander zu verstellenden Bauteilen befestigt. Bei Einsatz eines konventionellen Hydraulikzylinders ist die Anordnung der Befestigungsvorrichtung am Zylinderfuß nicht in jeder baulichen Ausführung möglich.

Einige Hydraulikzylinder sind aus korrosivem Werkstoff gefertigt. Bei dem Einsatz eines herkömmlichen Hydraulikzylinders besteht häufig die Gefahr einer materiellen Schwächung der Bauteile durch Korrosion, insbesondere wenn sie in einem chemisch aggressiven Bereich eingesetzt werden, wie diese beispielsweise beim Einbau in Düngerstreuern der Fall ist.
In der Praxis wird ein Schutzrohr auf das Hydraulikzylindergehäuse aufgesetzt. Das Schutzrohr besteht aus einem nichtrostenden Material und ist fest mit dem Hydraulikzylindergehäuse verbunden und schützt das Zylindergehäuse vor Korrosionen.

Der Erfindung liegt die Aufgabe zugrunde, die Befestigung des Zylindergehäuses an einem der jeweils zueinander zu verstellenden Bauteile zu verbessern.

Diese Aufgabe wird erfindungsgemäß dadurch gelöst, dass die dem Zylindergehäuse zugeordnete Befestigungsvorrichtung an dem Schutzrohr angeordnet ist. Infolge dieser Maßnahme kann das Zylindergehäuse in vereinfachter Weise ohne die Befestigungsvorrichtung hergestellt werden. Durch die Zuordnung der Befestigungsvorrichtung zu dem Schutzrohr, lässt sich die Befestigungsvorrichtung in einfacher Weise optimiert an die Einbauverhältnisse angepasst ausgestalten und platzieren.

Bei einem Hydraulikzylinder mit zumindest einem Hydraulikanschluss ist dieser zur Fixierung des Schutzrohres auf dem Zylindergehäuse vorgesehen und dass das Schutzrohr durch zumindest ein Hydraulikleitungsanschlusselement in gesicherter Weise an dem Zylindergehäuse angeordnet.

Eine vorteilhafte Positionierung der Befestigungsvorrichtung zu dem Zylindergehäuse lässt sich dadurch erreichen, dass das Schutzrohr auf seiner einen Seite über das Zylindergehäuse hinaus verlängert ist, dass in dem Endbereich des verlängerten Bereiches des Schutzrohres die Befestigungsvorrichtung angeordnet ist.

Damit das Schutzrohr einen Schutz für die Kolbenstange liefert, an der kein zu verstellendes Bauteil angeschlossen ist, ist vorgesehen, dass der Hydraulikzylinder als Gleichlaufzylinder mit aus beiden Böden des Zylinderrohres herausragenden Kolbenstangen ausgebildet ist und dass das Schutzrohr über das Ende der einen Kolbenstange hinausragt.

In einer Ausführungsform ist vorgesehen, dass in der Wand des Schutzrohres in dem über das Zylindergehäuse hinaus ragender Bereich zumindest eine Aussparung angeordnet ist. Hierdurch wird in einfacher Weise erreicht, dass in das Schutzrohr gelangende Verunreinigungen nach außen abgeführt werden.

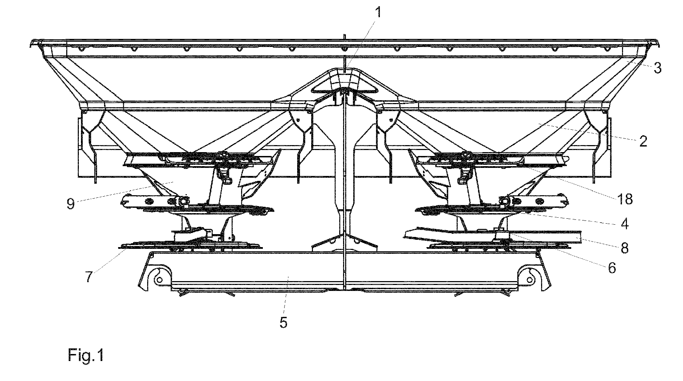

Weitere Einzelheiten der Erfindung sind der Beispielsbeschreibung und den Zeichnungen zu entnehmen. Hierbei zeigen
- Fig. 1: den Schleuderstreuer in der Ansicht von hinten und in Prinzipdarstellung,

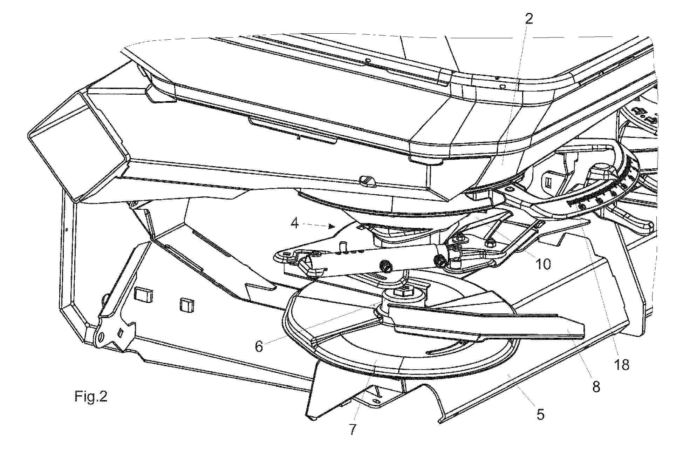

- Fig. 2: den in Fahrtrichtung gesehen linken Bereich des Streuers in perspektivischer Darstellung und in vergrößertem Maßstab,
- Fig. 3: der Boden mit Auslauföffnung und Schieber der Dosiereinrichtung mit Mengeneinstellung "0" und eingefahrenem Einstellelement in der Draufsicht,
- Fig. 4: der Boden mit Auslauföffnung und Schieber der Dosiereinrichtung mit Mengeneinstellung "0" und ausgefahrenem Einstellelement in der Draufsicht,
- Fig. 5: der Boden mit Auslauföffnung und Schieber der Dosiereinrichtung mit Mengeneinstellung "31" und eingefahrenem Einstellelement in der Draufsicht,
- Fig. 6: der Boden mit Auslauföffnung und Schieber der Dosiereinrichtung mit Mengeneinstellung "31" und ausgefahrenem Einstellelement in der Draufsicht,

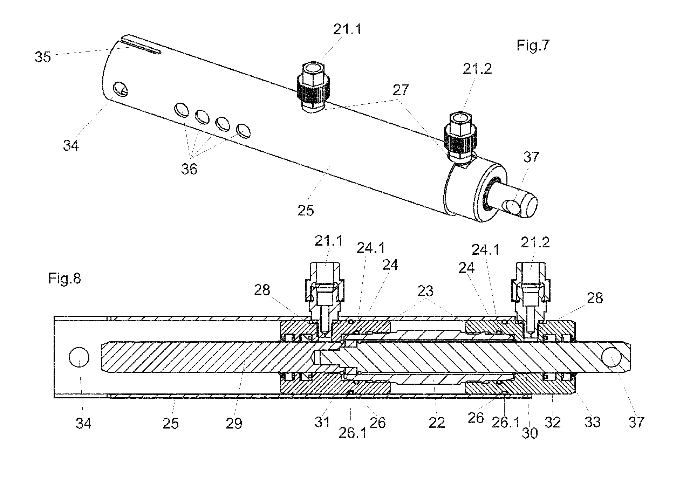

- Fig. 7: den erfindungsgemäßen Gleichlaufzylinder mit Schutzrohr in perspektivischer Ansicht und
- Fig. 8: den Gleichlaufzylinder mit Schutzrohr in Schnittansicht.

Die als Zweischeibendüngerstreuer ausgebildete Verteilmaschine weist den durch ein dachförmiges Mittelteil 1 in seinem unteren Bereich in zwei Auslauftrichter 2 aufgeteilten Vorratsbehälter 3 auf. Der Vorratsbehälter 3 ist mit einem nicht dargestellten Rahmen versehen, über den der Schleuderdüngerstreuer an den Dreipunktkraftheber eines Ackerschleppers anzuordnen ist. An den unteren Enden der Auslauftrichter 2 ist jeweils eine Dosiereinrichtung 4 angeordnet. Unterhalb der Dosiereinrichtung 4 sind auf aus einem Getriebeblock 5, der an dem nicht dargestellten Rahmen angeordnet ist, herausragenden und rotierend antreibbaren Wellen 6 Schleuderscheiben 7 mit darauf angeordneten Wurfelementen 8 angeordnet. Die Schleuderscheiben 7 rotieren in bekannter Weise ineinander entgegengesetztem Drehsinn.

Die jeweilige Dosiereinrichtung 4 weist ein topfförmiges Trichterelement 9 auf, in dessen Boden 10 zumindest eine als Auslassöffnung 11 ausgebildete Durchlassöffnung angeordnet ist. Die Auslassöffnung 11 wirkt mit einem Schieber 12 zusammen. Über den Schieber 12, der unterhalb des Bodens 10 des bodenförmigen Bereiches des Trichterelementes 9 der Dosiereinrichtung 4 angeordnet ist, ist die Auslassöffnung 11 verschließbar und in ihrer Öffnungsweise einstellbar. Der Schieber 12 ist an einem an dem Boden 10 der Dosiereinrichtung 4 in der Schwenkhülse 13 gelagerten Schwenkbolzen 14 verschwenkbar gegenüber der Durchlassöffnung 11 angeordnet.

Der Schieber 12 ist mittels eines als hydraulischer Gleichlaufzylinder 15 ausgebildeten Verstellelementes um die durch den Schwenkbolzen 14 verlaufende Schwenkachse in seine jeweilige Schließ- oder Öffnungsstellung zu verschwenken. Auf dem Schwenkbolzen 14 ist weiterhin der Schwenkhebel 15 der Mengeneinstelleinrichtung 16 verschwenkbar gelagert. Der Schwenkhebel 17 ist somit auf dem Schwenkbolzen 14, auf dem der Schieber 12 verschwenkbar angeordnet ist, gelagert. Der Schwenkhebel 17 ist an der an dem Vorratsbehälter 3 angeordneten Einstellskala 18 mittels der geeigneten Festsetzelementen 19 in der jeweils gewünschten Position festzusetzen.

Der hydraulische Gleichlaufzylinder 15 ist einerseits an dem Schieber 12 und andererseits an dem Schwenkhebel 17 mittels Verbindungselementen 20.1 und 20.2 befestigt. Somit ist das als hydraulischer Gleichlaufzylinder 15 ausgebildete Verstellelement unmittelbar zwischen dem Schieber 12 und dem Schwenkhebel 17 der Mengeneinstelleinrichtung 16. Die beiden Anschlüsse 21.1 und 21.2 des hydraulischen Gleichlaufzylinders 15 sind in nicht dargestellter Weise über Hydraulikleitungen an eine Hydraulikanlage, beispielsweise die des den Schleuderstreuer tragenden Ackerschleppers, in bekannter Weise angeschlossen.

Das als hydraulischer Gleichlaufzylinder 15 ausgebildete Verstellelement weist das Zylinderrohr 22 auf, das an seinen Enden mit jeweils identischen ausgestalteten Zylinderköpfen 23 abdichtend verschraubt ist. Die Zylinderköpfe 23 weisen eine innenliegende Ringnut 24 mit O-Ring 24.1 auf, welche vor der Verschraubung die Zylinderköpfe 23 und das Zylinderrohr 22 zueinander abdichtet. Über das Zylinderrohr 22 und die Zylinderköpfe 23 ist ein zumindest über die eine Kolbenlänge hinausragendes Schutzrohr 25 angeordnet. Das außenliegende Schutzrohr 25 schützt das aus Zylinderrohr 22 und Zylinderköpfen 23 bestehende Zylindergehäuse vor chemischen äußeren Einflüssen. Die in der Ringnut 26 angeordnete des jeweiligen Zylinderkopfes 23 gesonderte O-Ring 26.1 dichtet den Zylinder gegen das Schutzrohr 25 ab. Das Schutzrohr 25 ist jeweils im mittleren Bereich und an dem Ende des hervorstehenden Zylinderkopfes 23 mit einer Aussparung 27 versehen, damit die Hydraulikanschlüsse 21.1 und 21.2 des Schutzrohres 25 durchdringen können und so in die in den Zylinderköpfen 23 eingebrachten Gewindebohrung 28 befestigen und fixieren zu können.

Durch die zuvor erwähnten Hydraulikanschlüsse 21.1 und 21.2 gelangt Hydrauliköl über die Zylinderköpfe 23 in das Zylinderrohr 22. Bei abwechselnder Druckbeaufschlagung verfahren die zwei ineinander verschraubten Kolbenstangen 29 und 30, dessen Wirkfläche den mittig angeordneten Kolbenring 31 zwischen den beiden verbundenen Kolbenstangen 29 und 30 ausbildet, in die gegenüberliegende Stellung des jeweilig angesteuerten Hydraulikanschlusses. Das Hydrauliköl kann über den minimalen Spalt zwischen dem Zylinderrohr 22 und der Mantelfläche des Kolbenringes 31 bei dem Verfahren des Kolbenringes 31 mit den Kolbenstangen 29 und 30 in Verstellung der Dosiereinrichtung 4 in den drucklosen Bereich des Gleichlaufzylinders 15 überströmen um somit einen gewünschten Druckverlust zu erhalten. Eine Führung der Kolbenstangen 29 und 30 erfolgt durch die Zylinderköpfe 23, welche gegen austretendes Hydrauliköl mit jeweiliger Ringnut mit Führungsring 32, welcher als Abdichtung ausgestaltet ist und Ringnut mit Abstreifer 33 ausgeführt sind. Das Schutzrohr 25 weist am Ende der in eingefahrener Position herausragenden Kolbenstange 29 eine Bohrung 34 und ein im Winkel von 90° versetztes, gegenüberliegende offene Langlöcher 35 zur Befestigung am Schwenkhebel 17 auf. Somit ist die Befestigungsvorrichtung 34 und 35 an dem Endbereich des Schutzrohres 25 angeordnet, wobei die Bohrung 34 sich hinter der maximal ausgefahrenen Position der Kolbenstange 29 befindet. Somit ist die dem Zylindergehäuse zugeordnete Befestigungsvorrichtung 34, 37 an dem Schutzrohr angeordnet.

Die Kolbenstange 29 wird zusätzlich durch das Schutzrohr 25 von äußeren Einflüssen geschützt.

Auf gleicher Ebene der Bohrung sind zusätzlich noch vier Durchbrüche 36 angebracht, über die Verunreinigung aus dem Schutzrohr 25 abgeführt werden.

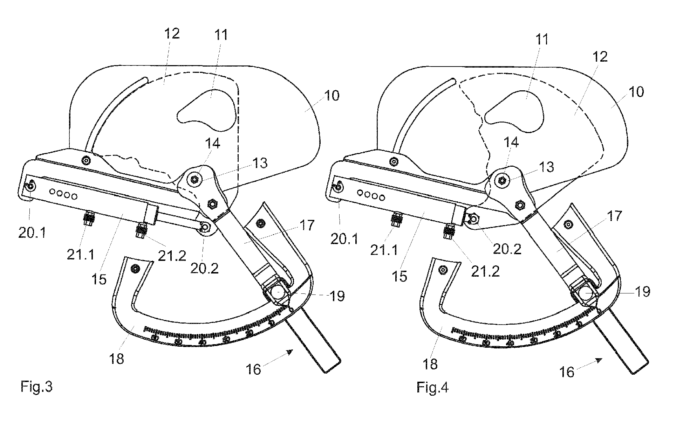

Die am Ende der aus dem Gleichlaufzylinder 15 austretenden Kolbenstange 28 befindliche Bohrung 37, ist als Bindeglied mit dem Schieber 12 ausgestaltet.
Durch den in verschiedenen Positionen festsetzbaren Schwenkhebel 17 der Mengeneinstelleinrichtung 16 nimmt der Schieber 12 in seiner Öffnungsstellung, in welcher er einen vorbestimmten Querschnitt 38 der Auslassöffnung 11 freigibt, jeweils eine vorbestimmte Position ein.
Der Schieber 12 weist eine Ausdehnung auf, die sich zumindest über den doppelten Öffnungswinkel der Auslassöffnung 11 erstreckt, wie beispielsweise der Fig. 3 zu entnehmen ist.

Die Funktionsweise ist folgende:

Gemäß der Fig. 3 ist der Schwenkhebel 17 in die Position "0" eingestellt. Weiterhin ist der hydraulische Gleichlaufzylinder 15 ausgefahren, dies bedeutet, dass der Schieber 12 die Auslassöffnung 11 völlig abdeckt, so dass kein Material der Schleuderscheibe 7 zugeführt wird. Wenn der Schieber 12 nun bei der eingestellten Position "0" für den Schwenkhebel 17 der Mengeneinstelleinrichtung 16 eingefahren wird, das heißt, der Schieber 12 wird an sich in seine Öffnungsposition geschwenkt, so deckt der Schieber 12 aufgrund seiner großen Ausdehnung und erfinderischen Ausgestaltung der Mengeneinstelleinrichtung 16, wie der Fig. 4 zu entnehmen ist, immer noch die Auslassöffnung 11 vollständig ab, so dass entsprechend der Einstellung des Schwenkhebels 17 auf der Position "0" kein Material der Schleuderscheibe 7 zugeleitet wird.

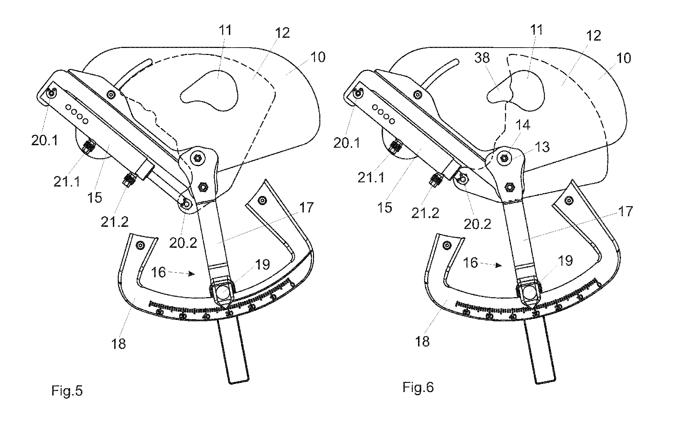

Wenn jedoch der Schwenkhebel 17 der Mengeneinstelleinrichtung 16 auf eine Position größerer "0", beispielsweise wie in Fig. 5 und 6 auf Position "31" eingestellt wird, so deckt der Schieber bei ausgefahrenem hydraulischen Gleichlaufzylinder 15, das heißt in seiner Schließposition die Auslassöffnung 11 vollständig ab, jedoch wenn der hydraulische Gleichlaufzylinder 15 voll eingefahren wird, gibt der Schieber 12 jetzt den gewünschten Querschnitt 38 der Auslassöffnung 11 frei. Durch den freigegebenen Querschnitt 38 der Auslassöffnung 11 wird dann Material in entsprechender Menge der Schleuderscheibe 7 zugeleitet.

Diese erfindungsgemäße Mengeneinstelleinrichtung 16 zeichnet sich dadurch aus, dass sie von dem motorischen Einstellelement, welches von dem hydraulischen Gleichlaufzylinders 15 gebildet wird, keine Kräfte in Teile der Mengeneinstell- 16 und/oder Dosiereinrichtung 4 überträgt, sondern sämtliche Kräfte die entstehen, von dem hydraulischen Gleichlaufzylinder 15 selbst bzw. dessen Bauteilen aufgenommen werden. Der Hydraulikzylinder selbst wird jeweils auf "Anschlag" gefahren.

## Patentansprüche

1. Hydraulikzylinder mit einem Zylindergehäuse und zumindest einem am Ende der Kolbenstange angeordnetem Kolben, der in dem Zylindergehäuse angeordnet ist, wobei ein Schutzrohr aus nichtrostendem Material über das Zylindergehäuse geschoben und mit diesem unverschiebbar angeordnet ist, wobei an dem aus dem Zylindergehäuse herausragendem Ende der Kolbenstange und an dem Zylindergehäuse jeweils eine Befestigungsvorrichtung angeordnet ist, **dadurch gekennzeichnet, dass** die dem Zylindergehäuse zugeordnete Befestigungsvorrichtung an dem Schutzrohr angeordnet ist.

2. Hydraulikzylinder nach Anspruch 1, wobei der Hydraulikzylinder zumindest ein Hydraulikleitungsanschlußelement aufweist, **dadurch gekennzeichnet, dass** das Schutzrohr durch zumindest ein Hydraulikleitungsanschlußelement in gesicherter Weise an dem Zylindergehäuse angeordnet ist.

3. Hydraulikzylinder nach Anspruch 1, **dadurch gekennzeichnet, dass** das Schutzrohr auf seiner einen Seite über das Zylindergehäuse hinaus verlängert ist, dass in dem Endbereich des verlängerten Bereiches des Schutzrohres die Befestigungsvorrichtung angeordnet ist.

4. Hydraulikzylinder nach zumindest einem der vorstehenden Ansprüche, **dadurch gekennzeichnet, dass** der Hydraulikzylinder als Gleichlaufzylinder mit aus beiden Böden des Zylinderrohres herausragenden Kolbenstangen ausgebildet ist und dass das Schutzrohr über das Ende der einen Kolbenstange hinausragt.

5. Hydraulikzylinder nach Anspruch 3 oder 4, **dadurch gekennzeichnet, dass** in der Wand des Schutzrohres in dem über das Zylindergehäuse hinaus ragendem Bereich zumindest eine Aussparung angeordnet ist.
